# EUROPEAN PATENT APPLICATION

(11) **EP 0 796 759 A2**
(43) Date of publication of application: **24.09.1997**
(21) Application number: 97830122.4
(22) Date of filing: 19.03.1997
(51) Int. Cl.: B60N 2/22

(54) **Device for adjusting the longitudinal position of a motor-vehicle seat**

(30) Priority: 22.03.1996 IT TO960227
(71) Applicant: LEAR CORPORATION ITALIA S.p.A., 10128 Torino (IT)
(72) Inventor: Bouhours, Daniel, 10095 Grugliasco (Torino) (IT)
(74) Representative: Notaro, Giancarlo

(57) **Abstract**

A device for adjusting the longitudinal position of a motor-vehicle seat comprises a one-piece guiding profile (5) which has a cross-section symmetrical with respect to a horizontal plane (X). The profile (5) has a lower portion slidably engaged by a rail (8) fixed to the vehicle floor and an upper portion slidably engaged by a seat component which is adjustable in position, for example an arm (14) for supporting the backrest. The guiding profile (5) can then be used both for the function of adjustment of the longitudinal position of the seat, and for the function of adjustment of the inclination of the backrest.

## Description

The present invention relates to devices for adjusting the position of a seat on a motor-vehicle floor panel along the longitudinal direction of the motor-vehicle, of the type indicated in the precharacterizing portion of Claim 1.

Devices of the above indicated type have been already proposed (see for example GB-A-2 074 020, JP-A-05 178 132, JP-A-05 178 133) in order to enable them to be used not only for adjusting the longitudinal position of the seat, but also for adjusting a further movable component of the seat, e.g. for adjusting the inclination of the backrest.

The object of the present invention is that of providing a device of the above indicated type which is particularly simple and of low cost.

In view of achieving this object, the present invention provides a device having the features indicated in Claim 1.

In a preferred embodiment, the movable slide is carried by a backrest supporting arm of the seat, so that a variation of the position of the slide on said further guiding profile causes a variation of the inclination of the backrest.

Thus, a device with a simple and inexpensive structure is obtained which can be used for two functions, that of adjusting the longitudinal position of the seat, and that of adjusting a further component of the seat, in the cited example for adjusting the inclination of the backrest.

Further features and advantages of the invention will become apparent from the description which follows with reference to the annexed drawings, given purely by way of non-limiting example, in which:

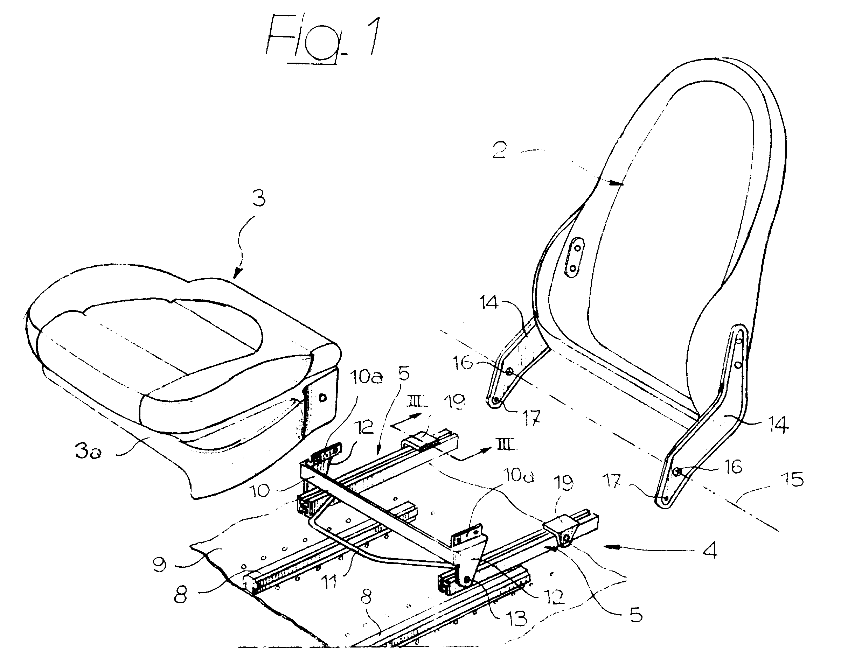

figure 1 is an exploded perspective view of a seat including the device according to the invention,
figure 2 is a side view of the seat of figure 1,
figure 3 is a cross-sectional view taken along line III-III of figure 1, and
figure 4 shows a variant of figure 3.

With reference to the drawings, numeral 1 generally designates a motor-vehicle seat, comprising a backrest 2 and a cushion 3 which are mounted, in a way known per se, on a base frame 4 comprising two guiding longitudinal profiles 5 arranged on both sides of the seat, constituted by sheet metal and having a H-shaped cross-section (figure 3) so as to define a lower guiding seat 6 and an upper guiding seat 7 opposite to each other and facing downwardly and upwardly respectively.

According to a technique known per se, the lower seats 6 slidably engage two longitudinal guiding rails 8 fixed to the floor panel 9 of the motor-vehicle. The frame 4, comprising the two guiding profiles 5 and a cross-member 10 connecting these profiles, is therefore slidably mounted on the rails 8 along the longitudinal direction of the motor-vehicle, so as to enable the position of the seat on the floor panel to be adjusted.

The profiles 5 are further provided with a locking device of any known type (not shown) to lock the seat in any of a number of possible positions, a lever 11 being provided for causing de-activation of said locking device each time that one wishes to adjust the longitudinal position of the seat. According to a conventional technique, lever 11 is elastically biased downwardly to a position for activating the locking device and is movable manually upwardly, against the action of the associated biasing spring means, each time that one wishes to unlock the seat in order to adjust the position thereof. As indicated already, the details of construction of the locking device, the control lever 11 and the connection thereof are not illustrated herein since they can be made in any known way and do not fall, taken alone, within the scope of the present invention. Furthermore, the deletion of these details from the drawings renders the latter easier and simpler to understand.

As indicated already in the foregoing, the base frame 4 of the seat includes the two profiles 5 and the cross-member 10 connecting these profiles. The cushion 3 has an associated supporting structure 3a which is fixed in any known way (e.g. by screws) to two side flanges 10a of cross-member 10.

Cross-member 10 further has at its ends two ears 12 which extend downwardly and are pivotally connected to the respective profiles 5 around a transverse axis 13.

The backrest 2 is provided at its lower part with two supporting arms 14 which are connected at their upper ends to the backrest structure 2 and are further pivotally mounted to the supporting structure 3a of cushion 3 around a transverse axis 15 by means of the engagement of articulation pins (not shown) within two coaxial holes 16 formed in arms 14.

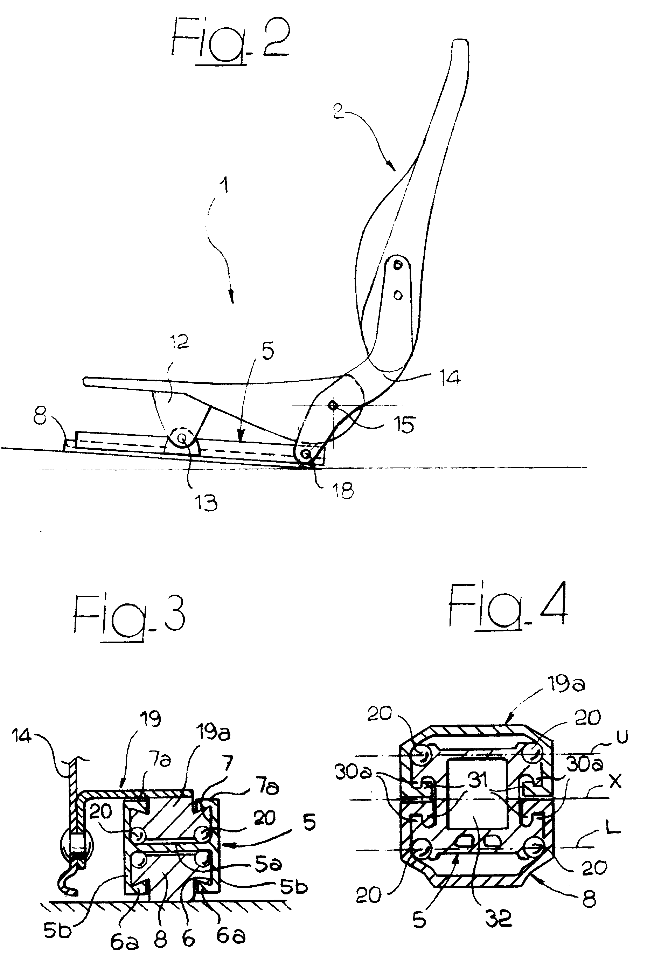

The latter further have at their lower ends coaxial holes 17 for being pivotally connected around an axis 18 (figure 2) to two respective slides 19 including portions 19a which slidably engage the seats 7 of the two profiles 5.

As shown in figure 3, the profile 5 has an intermediate horizontal wall 5a and two side vertical walls 5a with inwardly bent edges 6a, 7a so as to define T-shaped seats for the guiding rail 13 and the slide portion 19a which have corresponding cross-sections. As also shown in figure 3, within said seats there are inserted, according to a technique known per se, balls 20 for making sliding easier. Finally, as also shown in figure 3, each of the bent edges 6a, 7a has an increasing thickness towards its free end so as to define inclined sliding planes which are in contact with correspondingly inclined planes of rail 13 and slide portion 19a.

Due to the above described arrangement, the two guiding profiles 5 fulfil two functions. When it is necessary to adjust the longitudinal position of the seat 1, a sliding movement of the two guiding profiles 5 on the two guiding rails 8 is caused. In this case, the lower part of the guiding profiles 5 is used, with the respective guiding seats 6, similarly to what is done in the conventional technique. During adjustment of the position of the seat, the profiles 5 are moved with respect to rails 8, whereas slides 19 remain in fixed position with respect to the profiles and hence they are moved therealong until the inclination of the backrest is locked (by any known device, not shown). At the same time, the guiding profiles 5 can be used for the function of adjustment of the inclination of the backrest 2. In this case, the guiding profiles 5 remain in a pre-determined position with respect to guiding rails 8, and the device for locking the inclination of the backrest is de-activated in order to adjust the backrest as desired. In this case, slides 19 are caused to slide within the respective seats 7 of the two guiding profiles 5 thus causing a rotation of arms 14 (and hence of the whole backrest 2) around the transverse axis 15. As clearly apparent, this arrangement also enables a rapid and continuous adjustment of the position of the backrest to be obtained with simple and inexpensive means. Once the desired position for the backrest is reached, the device for locking the backrest can be activated again. The described arrangement is advantageous both with respect to known adjusting devices which involve an adjustment at discrete positions of the backrest, since in the case of the invention the backrest can be arranged at any position between two end positions, and with respect to the known devices which involve a continuous adjustment of the backrest, but achieve this result with relatively complicated and expensive means, which also require a relatively long adjustment time, such as in the case of adjustment devices with planetary gears.

Figure 4 shows a variant of figure 3. In this figure, parts corresponding to those of figure 3 are designated by the same reference numeral. In this case the profile 5 has an I-shaped cross-section which, as in the case of figure 3, has a horizontal plane of simmetry X, intermediate between the sliding general planes L,U of rail 8 and slide 19. The I-shaped cross-section defines two opposed heads 30, which are T-shaped and engage facing cavities of two C-shaped profiles respectively constituting the portion 19a of the movable slide 19 and the guiding rail 18. In the illustrated example, the I-shaped profile 5 is an extrusion of aluminium alloy, having an inner longitudinal cavity 32. Each T-shaped head 30 of the extruded profile 5 has two side edges 30a vertically projecting towards the opposite head and engaged by inwardly bent edges 31 of the respective C-shaped profile 8 or 19a. Also in this case balls 20 are interposed between mutually slidable elements.

Naturally, the device according to the invention can be used for the adjustment of the position of any further movable component of the seat, instead of the backrest.

It is also apparent that, while the principle of the invention remains the same, the details of construction and the embodiments may widely vary with respect to what has been described and illustrated purely by way of example, without departing from the scope of the present invention.

## Claims

1. Device for adjusting the position of a seat (1) on a floor panel (9) of a motor-vehicle along the longitudinal direction of the motor-vehicle, comprising at least one guiding rail (8) which can be fixed to the floor panel (9) and a guiding profile (6) fixed to the seat (1) and slidably mounted on said guiding rail (8), wherein said guiding profile (6) is rigidly connected to a further guiding profile (7) on which there is slidably mounted a movable slide (19) carried by a component (2) of the seat which is adjustable in position, characterized in that the two guiding profiles (6, 7) are formed in one piece and define a single profile (5) which is slidably engaged by said movable slide (19) from above and by said guiding rail (8) from below, said single profile (5) having a cross-section with a shape symmetrical with respect to a horizontal plane (X) intermediate between the general sliding planes (L,U) of said guiding rail (8) and said movable slide (19).

2. Device according to claim 1, characterized in that said single profile (5) has a H-shaped cross-section defining two opposite guiding seats (6, 7) for engagement of the guiding rail (8) and the said slide (19) respectively, said H-shaped cross-section being defined by an intermediate horizontal wall (5a) and two side vertical walls (5b) with inwardly projecting upper and lower edges (6a,7a), so that said sliding seats (6,7) have a T-shaped cross-section.

3. Device according to claim 1, characterized in that said single profile (5) has an I-shaped cross-section, defining two opposed sliding heads (30), each T-shaped, for engagement of the guiding rail (8) and said slide (19a) respectively, these latter being formed each by a C-shaped profile which receives the respective T-shaped head (30) therewithin.

4. Device according to claim 3, characterized in that said I-shaped profile (5) is an extruded profile of aluminium alloy, having a hollow body.

5. Device according any of the previous claims, characterized in that said slide (19) is carried by an arm (14) for supporting the backrest (2) of the seat (1), so that a variation of the position of the slide (19) on said further guiding profile (7) causes a variation of the inclination of the backrest (2).

6. Motor-vehicle seat, characterized in that it comprises a device according to any of the previous claims.

7. Motor-vehicle seat according to claim 6, characterized in that it has a cushion (3) pivotally supported around a transverse axis (13) on said guiding profile (6) and pivotally connected around a transverse axis (16) to said arm (14) for supporting the backrest.
